# EUROPEAN PATENT SPECIFICATION

(11) **EP 2 618 970 B1**
(45) Date of publication and mention of the grant of the patent: **15.01.2020**
(21) Application number: 10857480.7
(22) Date of filing: 23.09.2010
(51) Int. Cl.: B27B 5/38, B23D 47/00, B23D 59/00

(54) **DEVICE FOR STABILIZING THE ROTATION OF A CIRCLE SAW BLADE**
VORRICHTUNG ZUR STABILISIERUNG DER DREHUNG EINES KREISSÄGEBLATTS
DISPOSITIF PERMETTANT DE STABILISER LA ROTATION D'UNE LAME DE SCIE CIRCULAIRE

(43) Date of publication of application: 31.07.2013
(73) Proprietor: Viljanen, Reijo, 33101 Tampere (FI)
(72) Inventor: Viljanen, Reijo, 33101 Tampere (FI)
(74) Representative: Koivisto, Harri Kristian
(86) International application number: PCT/FI2010/000057
(87) International publication number: WO 2012/038578

(56) References cited:
- DE-A1- 19 653 242
- JP-A- H06 278 127
- SE-B- 436 849
- SE-B- 436 849
- US-A- 3 327 696
- US-A- 5 503 202
- US-A1- 2008 302 227

## Description

The invention relates to an apparatus for stabilizing the rotation of a circular saw blade and keeping it on a desired sawing line, the apparatus comprising means for generating a magnetic field in connection with the ferrous metal circular saw blade, as well as devices for adjusting the intensity of said magnetic field, such as a control centre and a sensor measuring the lateral station of the circular blade.

Prior known from Finnish patent publication FI-107319 are magnets intended for stabilizing the rotation of circular saw blades, by means of which an attempt is made to keep the blade on the sawing line as well as to remain stable. In this control of a band saw blade, the magnets can be both on the visible part of the blade as well as at the wood, wherein force is directed through the wood. In the case of a circular saw blade, the magnets are on the visible flank portion of the blade, where there can be pull-type or push-type magnets. The magnets can be on the flank part also at the wood to be sawed, if such a flank part is visible, i.e. the diameter of the blade is large enough in relation to the wood to be sawed. However, in this case, the circular saw cannot saw wood of maximum size, unless the magnetic means are removed from the line of travel of the wood. However, of the wood to be sawed, it is precisely those having the largest diameters that require stabilization of the circular blade performed by the magnetic means. The known solutions cannot obviate this disadvantage. Using the known solutions, a precise and fast adjustment system with its feedback must also be made for the control magnet in order that the magnetic force does not pull or push too much.

SE436849B discloses an apparatus according to the preamble of claim 1 and a procedure for controlling a movable sawing tool and the device for executing this procedure. The saw blade is located in an electrical or magnetic force field, and an appliance is used to regulate the force field so that it tends to situate the saw blade in the desired movement path.

By using an apparatus according to the invention, the disadvantage occurring in this kind of sawing is obviated, and the apparatus is characterized in that, of the means for generating the magnetic field, at least the metal parts ultimately conducting the magnetic flux into the circular saw blade are positioned, in relation to the circular saw blade, outside of its toothing, at the teeth substantially to the plane of the circular saw blade.

The advantage of an apparatus according to the invention is that the parts included therein are all to be positioned in connection with the circular saw blade such that they do not decrease the maximum size of wood to be sawed. They are to be positioned at different inscribed angles of the circular saw blade, as needed. The magnetic stabilization is to be switched on, if necessary, when the sensor of the adjustment device detects deviation of the blade from the line due to stress or waviness. Too great a magnetic force does not move the blade into an incorrect station, as it does in known apparatuses. Due to this, the control arrangement adjusting the magnetic force is simple, because force is to be added only just enough that the blade returns to the sawing line. Excessive addition of force does not matter. The metal parts conducting the magnetic flux to the circular saw blade are to be positioned onto the circumference of the circular blade, into all other circumferential stations, with the exception of those that are on the line of travel of the wood to be sawed.

In the following, the invention is described in more detail by means of reference to the accompanying figures, in which
Fig. 1 shows a lateral view of a circular blade stabilization apparatus.
Fig. 2 shows the solution of Fig. 1 as sectioned along the line II - II.
Fig. 3 shows an alternative solution as viewed from the axial direction.
Fig. 4 shows the placement of several circular blades onto an axis using the stabilization apparatus of Fig. 3.
Fig. 5 shows one placement of the magnets adjusting the blade flange by pushing.
Fig. 6 shows another placement of the magnets adjusting the blade flange by pulling.

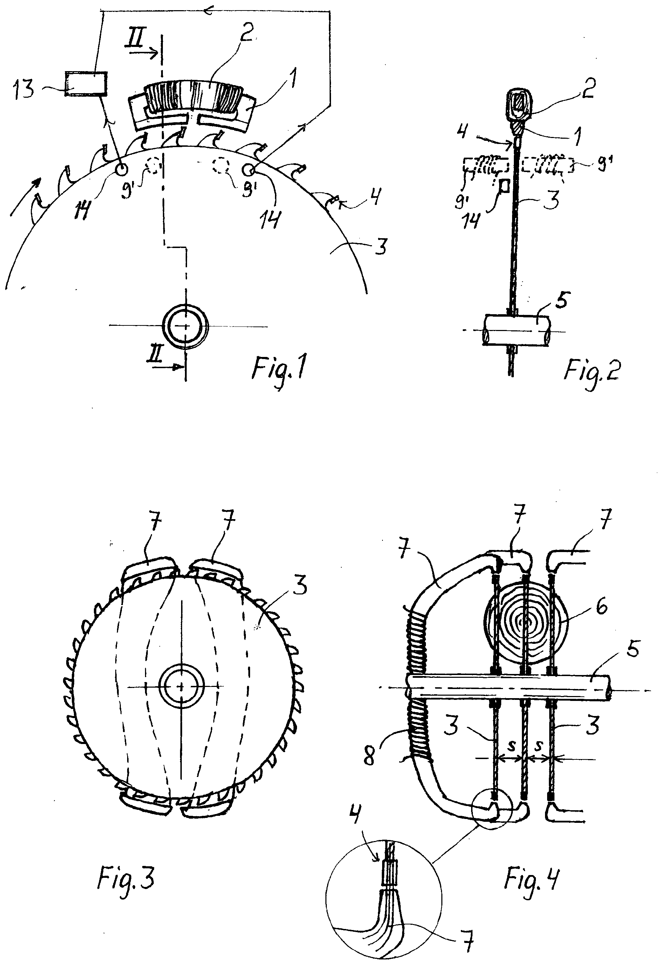

Fig. 1 shows, positioned above the circular saw blade 3 equipped with teeth 4, a circular blade 3 stabilization apparatus according to the invention, which includes a ferrous metal part 1 and, connected thereto, a coiling 2 for generating a magnetic field by means of electricity. The magnetic flux created travels from the one end of the part 1 into the ferrous metal circular saw blade 3 and returns almost immediately back into the other end of the part 1. Fig. 2 shows the mutual positions of the circular blade 3, positioned on the axis 5, and the part 1, wherein they are in the same plane of the blade flange 3. When the part 1, 2 is coupled to form a magnet, and the parts 1, 2 are not allowed to approach the toothing 4, the magnet formed, i.e. the part 1, pulls the circular blade towards itself and, at the same time, keeps the circular blade 3, at least to its upper end, centrally on the line of the lower end of the part 1. The lower end of the part 1 is narrowed such that its width towards the toothing 4 is approximately the same as the width of the teeth 4. This design assures that, in the situation of Figs. 1 and 2, the magnetic part 1 pulls the upper end of the circular blade to the position defined by the part 1. The station of the circular blade 3 in the lateral direction is measured, for example, by sensors 14 that are in the locations shown in Fig. 1, the station information of which is received in the control centre 13. Such sensors measuring the lateral station of a circular blade are required in all cases, in which magnetic force is adjusted.

Stabilization/control devices functioning by magnetic force, like those of Fig. 1, are to be positioned at different circumferential stations of the circular saw blade 3, with the exception of those that are on the line of travel of the wood.

Fig. 3 shows the conducting of the magnetic flux through the circular blade 3 onto the opposite side by a collar-type magnetic unit 7. The coil 8 magnetizing the unit 7 is positioned at an appropriate site. There can be several units 7 at different circumferential stations around the circular blade 3.

Fig. 4 shows several circular blades 3 on an axis 5. Separate magnetic stabilization devices 7, 8 are to be installed for all the circular blades 3. The magnetic units 7 of the stabilization devices with their coils 8 are positioned onto both sides of the set of circular blades. From the magnified view can be seen, as shown by lines, the travel of the magnetic flux from the part 7, through the tooth 4, to the circular blade 3. The magnetic flux attempts to keep the tooth part of the circular blade just at the tip of the part 7. If adequate magnetic flux and intensity are maintained, stabilization functions automatically without larger adjustments.

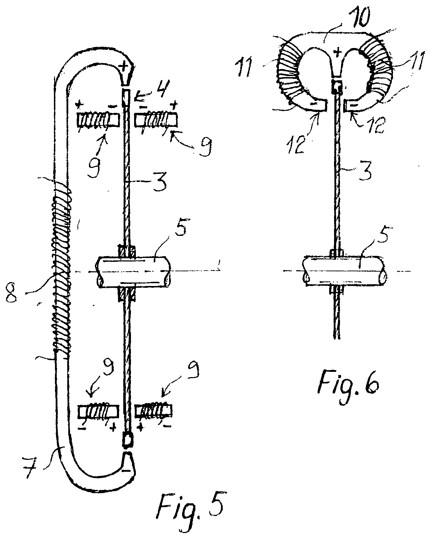

In Fig. 5, by the means 7, 8 for generating a magnetic field, a magnetic polarity is created in the blade flange 3, wherein a pushing force centring the blade flange between the magnets is caused by the magnets 9 positioned onto the side of the flange 3. The polarity of the magnet 9 is selected such that the end of the magnet 9 directed towards the blade flange 3 has the same sign as the polarity of the blade flange 3 at that site. In this case, forces pushing the blade flange 3 in the lateral direction are created by the magnets 9, the forces centring the blade flange 3 between the magnets. The centring force of the magnets 9 preferably increases itself, if the blade flange 3 begins to deviate from the centre line, i.e. moves closer to the other magnet 9.

In Fig. 6, the blade flange 3 is magnetized by a magnet 10 equipped with coilings 11 such that the poles 12 of the magnet, directed towards its flanks, are pushing, and both push the blade flange 3 such that it attempts to keep on the centre line.

The blade flange 3 can also be magnetized in a manner according to Figs. 1 and 2, wherein the magnets 9 according to Fig. 5 are positioned, for example, in the locations shown by dashed lines 9', in which the magnetic flux occurs intense in the blade flange. Naturally, the magnets 9 are to be positioned anywhere in the inscribed angle area of the blade flange and to magnetize the blade flange 3 in these locations.

The magnet parts 1, 2 and 7, 8 or 10, 11 of a stabilization device according to the invention can also be fastened to the frame of a sawing device such that these can be moved, as needed, during sawing, if the circular blade 3 does not otherwise seek to the intended line or the magnetic force cannot manage to pull the circular blade onto the correct line. The force moving the circular blade 3 in the lateral direction is thus made to increase, when the part 1 or 7 pulls the blade slightly laterally. Naturally, the stabilization devices are to be moved and stationed also for the reason that the circular blades 3 are adjusted into new locations on an axis 5, when it is desired to saw timber having various thicknesses.

## Claims

1. An apparatus for stabilizing the rotation of a circular saw blade (3) and keeping it on a desired sawing line, the apparatus comprising means (1, 2); (7, 8); (10, 11) for generating a magnetic field in connection with a ferrous metal circular saw blade (3) as well as devices for adjusting the intensity of said magnetic field, such as a control centre (13) and a sensor (14) measuring the lateral station of the circular blade (3), **characterized in that**, amongst the means for generating the magnetic field, at least the metal parts (1); (7) or (10), or some of these parts, ultimately conducting the magnetic flux into the circular saw blade (3) are positioned, in relation to the circular saw blade (3), outside of its toothing (4) substantially at the teeth, in the plane of the circular saw blade (3).

2. An apparatus according to claim 1, **characterized in that** the metal part (1) conducting the magnetic flux into the circular saw blade (3) and the metal part receiving the returning magnetic flux from said blade, both of these are located successively outside the circumference of said blade.

3. An apparatus according to claim 1, **characterized in that** the metal part (7) conducting the magnetic flux into the circular saw blade (3) and the metal part receiving the returning magnetic flux from said blade, both of these are located successively outside the circumference of said blade, on opposite sides of the circular blade (3).

4. An apparatus according to the claim 1, **characterized in that** at least the metal parts (1); (7); (10) ultimately conducting the magnetic flux into the circular saw blade (3) are to be moved according to the movement of the circular blades (3) adjustable in their stations and their distance (s).

5. An apparatus according to the claim 1, **characterized in that** at least some of the metal parts (1), (7); (10) ultimately conducting the magnetic flux into the circular saw blade (3) are positioned, in relation to the axis (5) of the saw blade, such that the wood (6) to be sawed travels between them and the axis (5).

6. An apparatus according to the claim 1, **characterized in that** there are several wood (6) sawing circular blades (3) on the axis (5) of the saw blade, wherein the means (1, 2), (7, 8); (10) for generating the magnetic field are located partially overlapping, at different circumferential stations or on both sides of the set of circular blades.

7. An apparatus according to the claim 1, **characterized in that** there are magnets (9), (12) creating a pushing force onto the circular blade (3) on the sides of the circular blade (3).

## Patentansprüche

1. Vorrichtung zum Stabilisieren der Drehung eines Kreissägeblatts (3) und zum Halten des Blatts auf einer gewünschten Schnittlinie, wobei die Vorrichtung umfasst: Mittel (1, 2); (7, 8); (10, 11) zur Erzeugung eines magnetischen Feldes in Verbindung mit einem eisenmetallischen Kreissägeblatt (3) sowie Vorrichtungen zur Verstellung der Intensität des magnetischen Feldes, wie ein zentrales Steuergerät (13) und einen Sensor (14), der die Seitenposition des Kreissägeblatts (3) misst, **dadurch gekennzeichnet, dass** unter den Mitteln zur Erzeugung eines magnetischen Feldes mindestens die Metallteile (1); (7) oder (10), oder einige dieser Teile, die den Magnetfluss abschließend in das Kreissägeblatt (3) leiten, im Verhältnis zum Kreissägeblatt (3), außerhalb von dessen Zahnkreis (4) im Wesentlichen an den Zähnen, in der Ebene des Kreissägeblatts (3) positioniert sind.

2. Vorrichtung nach Anspruch 1, **dadurch gekennzeichnet, dass** das Metallteil (1), das den Magnetfluss in das Kreissägeblatt (3) leitet, und das Metallteil, das den aus dem Blatt zurückkehrenden Magnetfluss aufnimmt, beide nacheinander außerhalb des Umfangs des Blatts angeordnet sind.

3. Vorrichtung nach Anspruch 1, **dadurch gekennzeichnet, dass** das Metallteil (7), das den Magnetfluss in das Kreissägeblatt (3) leitet, und das Metallteil, das den aus dem Blatt zurückkehrenden Magnetfluss aufnimmt, beide nacheinander außerhalb des Umfangs des Blatts an entgegengesetzten Seiten des Kreissägeblatts (3) angeordnet sind.

4. Vorrichtung nach Anspruch 1, **dadurch gekennzeichnet, dass** mindestens die Metallteile (1); (7); (10), die den Magnetfluss abschließend in das Kreissägeblatt (3) leiten, entsprechend den in Position und Abstand verstellbaren Kreissageblättern (3) zu bewegen sind.

5. Vorrichtung nach Anspruch 1, **dadurch gekennzeichnet, dass** mindestens einige der Metallteile (1); (7); (10), die den Magnetfluss abschließend in das Kreissägeblatt (3) leiten, im Verhältnis zur Achse (5) des Sägeblatts so positioniert sind, dass das zu sägende Holz (6) zwischen ihnen und der Achse (5) hindurchläuft.

6. Vorrichtung nach Anspruch 1, **dadurch gekennzeichnet, dass** es mehrere Holz (6) sägende Kreissägeblätter (3) auf der Achse (5) des Sägeblatts gibt, wobei die Mittel (1, 2), (7, 8); (10) zur Erzeugung des magnetischen Feldes teilweise überlappend an unterschiedlichen Umfangspositionen oder auf beiden Seiten des Satzes von Kreissägeblättern angeordnet sind.

7. Vorrichtung nach Anspruch 1, **dadurch gekennzeichnet, dass** Magneten (9), (12) vorgesehen sind, die an den Seiten des Kreissägeblatts (3) eine Schubkraft auf das Kreissägeblatt (3) erzeugen.

## Revendications

1. Appareil pour stabiliser la rotation d'une lame de scie circulaire (3) et la maintenir sur un axe de sciage désiré, ledit appareil comprenant des moyens (1, 2); (7, 8); (10, 11) pour générer un champ magnétique en relation avec une lame de scie circulaire (3) de métal ferreux et des dispositifs pour régler l'intensité du champ magnétique, tel qu'un centre de commande (13) et un capteur (14) mesurant la position latérale de la lame circulaire (3), **caractérisé en ce que**, parmi les moyens pour générer le champ magnétique, au moins les pièces métalliques (1) ; (7) ou (10), ou quelques-unes desdites pièces, conduisant le flux magnétique finalement dans la lame de scie circulaire (3) sont positionnées, par rapport à la lame de scie circulaire (3), à l'extérieur de sa denture (4) essentiellement au niveau des dents, dans le plan de la lame de scie circulaire (3).

2. Appareil selon la revendication 1, **caractérisé en ce que** la pièce métallique (1) conduisant le flux magnétique dans la lame de scie circulaire (3) et la pièce métallique accueillant le flux magnétique revenant de la lame sont, toutes les deux, situées successivement à l'extérieur du périmètre de la lame.

3. Appareil selon la revendication 1, **caractérisé en ce que** la pièce métallique (7) conduisant le flux magnétique dans la lame de scie circulaire (3) et la pièce métallique accueillant le flux magnétique revenant de la lame sont, toutes les deux, situées successivement à l'extérieur du périmètre de la lame, sur des côtés opposés de la lame circulaire (3).

4. Appareil selon la revendication 1, **caractérisé en ce qu'**au moins les pièces métalliques (1) ; (7); (10) conduisant le flux magnétique finalement dans la lame de scie circulaire (3) sont à déplacer selon le mouvement des lames de scie circulaires (3) réglables en leurs positions et en leur(s) distance(s).

5. Appareil selon la revendication 1, **caractérisé en ce qu'**au moins quelques-unes desdites pièces métalliques (1) ; (7); (10) conduisant le flux magnétique finalement dans la lame de scie circulaire (3) sont positionnées, par rapport à l'axe (5) de la lame de scie, de manière que le bois (6) devant être scié se déplace entre celles-ci et l'axe (5).

6. Appareil selon la revendication 1, **caractérisé en ce que**, sur l'axe (5) de la lame de scie, il y a plusieurs lames de scie circulaires (3) sciant du bois (6), lesdits moyens (1, 2), (7,8) ; (10) pour générer le champ magnétique étant disposés en chevauchement partiel à des positions circonférentielles différentes ou des deux côtés du jeu de lames circulaires.

7. Appareil selon la revendication 1, **caractérisé en ce qu'**il y a des aimants (9), (12) créant une force de poussée sur la lame circulaire (3) sur les côtés de la lame circulaire (3).
